(19) **Europäisches Patentamt**
**European Patent Office**
**Office européen des brevets**

(11) **EP 4 783 559 A1**

(12) **EUROPEAN PATENT APPLICATION**

(43) Date of publication:
29.07.2026 Bulletin 2026/31

(21) Application number: 26151120.8

(22) Date of filing: 09.01.2026

(51) International Patent Classification (IPC):
*H04M 1/72454* (2021.01)   *G06F 1/3231* (2019.01)
*G06F 1/16* (2006.01)

(52) Cooperative Patent Classification (CPC):
**H04M 1/72454; G06F 1/1694; G06F 1/3231**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 22.01.2025 IT 202500001086

(71) Applicant: STMicroelectronics International N.V.
1228 Plan-les-Ouates, Geneva (CH)

(72) Inventors:
• **RIVOLTA, Stefano Paolo**
**20864 AGRATE BRIANZA (MB) (IT)**
• **ARRIGONI, Piergiorgio**
**20864 AGRATE BRIANZA (MB) (IT)**
• **BIANCO, Marco**
**20864 AGRATE BRIANZA (MB) (IT)**

(74) Representative: **Studio Torta S.p.A.**
**Via Viotti, 9**
**10121 Torino (IT)**

(54) **METHOD AND SYSTEM FOR DETECTING A STATE OF MOTION OF AN ELECTRONIC DEVICE, IN PARTICULAR WHETHER A USER CARRIES THE ELECTRONIC DEVICE IN A BAG**

(57)    An in-bag detection method computes a plurality of features from sensors data and, through an AI model, performs a classification of the state of motion of an electronic device based on the plurality of features. The method then performs a meta-classification over an output of the AI model by using counters for each of the values that the output can assume to check for consistency of the output. Once the counters of the meta-classifier of the output of the AI model have reached consistency, an inbuilt stability mechanism is triggered. The inbuilt stability mechanism does not require allocation of timers or other external resources. Therefore, instead of calculating the entire plurality of features needed by the AI models, only a subset of features related to motion is calculated.

FIG. 2

EP 4 783 559 A1

**Description**

TECHNICAL FIELD

The present invention relates to a method for detecting a state of motion of an electronic device, to a system for detecting a state of motion of an electronic device, and to the electronic device including the system for detecting the state of motion.

STATE OF THE ART

Operating systems provide a comprehensive and system-wide set of power management features. This enables systems to extend battery life and save energy, reduce heat and noise. Power efficiency is particularly important on portable computers. Reducing system power consumption translates directly to lower energy costs and longer battery life.

Typically, operating systems support multiple power states, which are intermediate states between a "turned-off" state (the system is completely off and consumes no power) and a "full on" state (during which the system is fully usable). Common intermediate states are usually referred to as "sleep" (a low-power idle state) and "hibernate" (the system appears to be off, power consumption is reduced to the lowest level, and contents of volatile memory is saved to a hibernation file to preserve system state). From sleep and hibernate states, the power management software usually makes computers (almost) instantly accessible to user at the touch of a button or key.

For example, the Windows operating system can use power-management hardware to put the computer into a low-power sleep state instead of shutting down completely, so that the system can quickly resume working. The operating system will automatically enter the sleep state when the computer is idle or when the user presses a button to indicate that the current work session is over. To the user, the system appears to be off. While in the sleep state, the computer's processor is not executing code or alternatively can execute code, but several functionalities are limited for power saving. Instead, in a hibernate state, the processor does not execute any code.

However, events in the system from both hardware devices and the real-time clock can be enabled to cause the system to exit the sleep state (that is, "wake up") and quickly return to the working state.

However, PC makers are interested to customize power state transitions based on their needs, and, more specifically, based on automatic recognition of specific events which do not require a direct interaction of the user with the computer (such as pressing a key or button, closing the lid, etc.). These events may include actions performed by the user when carrying or handling the portable computer, such as putting the computer in a bag, retrieving the computer from the bag, carrying the computer in the bag, and the like. In the following disclosure, the term "in-bag detection" refers to the detection of the action of the user that carries the computer in the bag.

In-bag detection methods can be either executed by a logic core embedded in the device or executed as a software library in an external application processor. In some cases, the in-bag detection method can only be computed as software library in the external application processor. Software libraries that implement artificial intelligence (AI) or machine learning (ML) models are power and time consuming.

A solution known to the Applicant to limit time and power consumption during the execution of an in-bag detection software library implementing AI/ML models relies on a stability mechanism. Said stability mechanism stops the execution of the software library after a meta-classified output of the software library has been consistent for a certain amount of time and the device is not subject to significant motion anymore. This stability mechanism was implemented through the use of a timer integrated in the application processor. However, in some cases the timer integrated in the application processor is not available to implement said stability mechanism.

Patent application US 2015/012248 A1 discloses embodiments related generally to determining a state associated with a device in accordance with a classification of sensor measurements associated with the device. However, the above-mentioned need are not achieved.

Therefore, there is the need to obviate to the use of a timer.

SUMMARY

According to the present invention, a method for detecting a state of motion of an electronic device, a system for detecting a state of motion of an electronic device, and the electronic device including the system for detecting the state of motion are provided, as defined in the annexed claims.

BRIEF DESCRIPTION OF THE DRAWINGS

For a better understanding of the present invention, preferred embodiments thereof will now be described purely by way of non-limiting example with reference to the appended drawings, wherein:

- Figure 1 shows a block diagram of an electronic device including a detection system, according to an embodiment of the present invention;
- Figure 2 shows a block diagram of an in-bag detection method carried out by the detection system of Figure 1, according to an embodiment of the present invention;
- Figure 3A shows an example of first sensor data generated by a first motion sensor over a plurality of acquisition time windows;
- Figure 3B shows a zoomed-in view of sampling times of the first two acquisition time windows of the example of Figure 3A;
- Figure 3C shows an exemplary norm of the first sensor data of the example of Figure 3A;
- Figure 3D shows an exemplary norm within an acquisition time window and the mean of the exemplary norm within said acquisition time window; and
- Figures 4A and 4B illustrate respective exemplary operations of a metaclassifier block.

DESCRIPTION OF PREFERRED EMBODIMENTS OF THE INVENTION

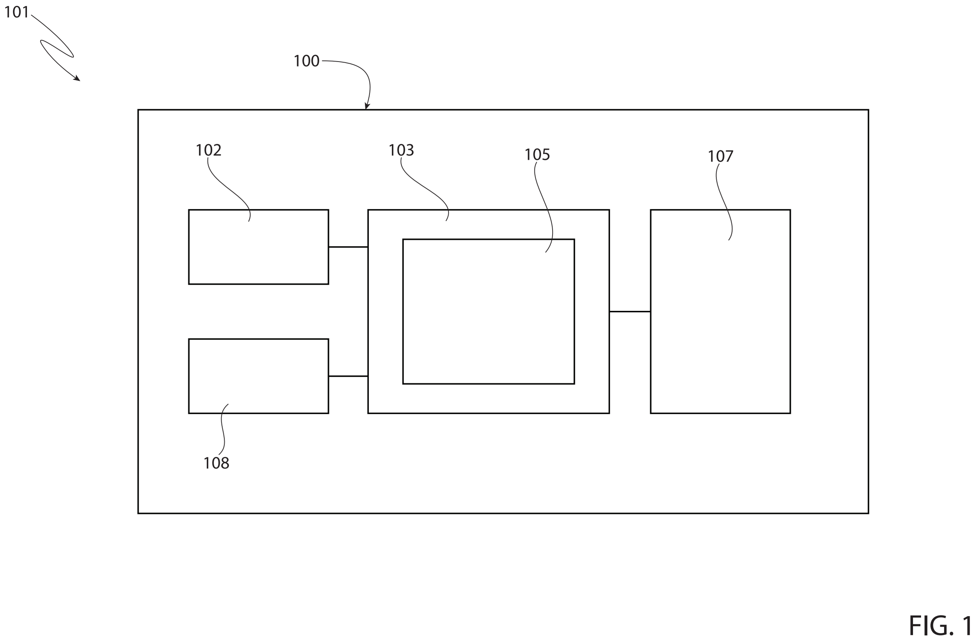

Figure 1 shows a block diagram of an electronic device 101 including a detection system 100, according to an embodiment of the present invention.

The detection system 100 of the electronic device 101 may be used to determine whether the electronic device 101 is in a particular state of motion, more in particular if the electronic device 101 is stored in a bag, and/or carried in a bag and/or inserted in the bag and/or removed from the bag. The electronic device 101 may be, for example, a laptop computer or a foldable device. The detection system 100 includes a first motion sensor 102, in particular an accelerometer, of per se known type, and a processor or microprocessor 103 (also named "application processor" in the following, without limiting the present disclosure) that is coupled to an output of the first motion sensor 102.

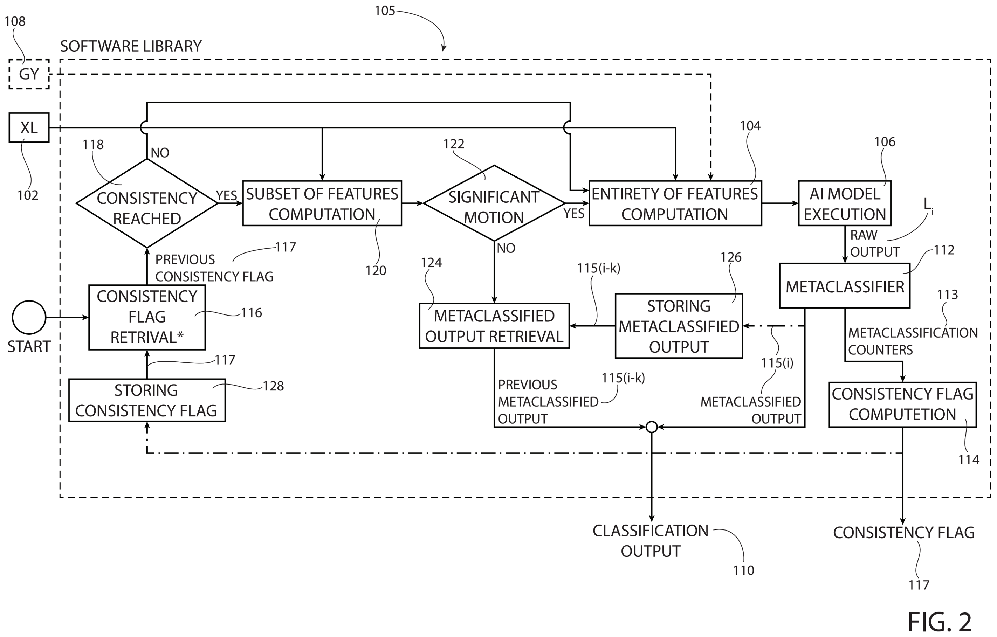

The application processor 103 is configured to execute an in-bag detection method 105, in particular an in-bag detection software library, configure to detect whether or not the electronic device 101 is stored in a bag and/or carried in a bag by a user. The bag may be any sort of container, rigid or flexible or semiflexible, with an opening adapted to insert the electronic device 101 and used for carrying the electronic device 101, among other things if necessary. The method disclosed may alternatively be used to detect whether or not the electronic device 101 is carried by the user without such bag, but directly carrying handheld the device 101. The in-bag detection method is described in detail in the following, with reference to Figure 2.

The detection system 100 further includes a memory 107 coupled to the application processor 103. The memory 107 may be a memory buffer register of the application processor 103, and/or another type of memory, such as RAM, solid state memory, FLASH memory, EPROM, EEPROM, etc.

Optionally, the detection system 100 further includes a second motion sensor 108, in particular a gyroscope, of a per se known type, that measures a different motion characteristic compared to the first motion sensor 102. In embodiments in which the detection system 100 includes the second motion sensor 108, the application processor 103 is coupled to an output of the second motion sensor 108.

The first motion sensor 102 and the second motion sensor 108 are configured to generate respective sensors data indicative of the type of movements to which the electronic device 101 is subject. Furthermore, the first motion sensor 102 and the second motion sensor 108 are configured to provide respective output signals including said sensors data to the application processor 103.

With reference to Figure 2, the application processor 103 is configured to execute recursively the in-bag detection method 105.

In an embodiment, the first motion sensor 102 and the second motion sensor 108 (if present) are configured to generate a new sample at a configurable sampling rate. At each iteration ($i$=1, $i$=2, ..., $i$=N) of the recursive execution of the in-bag detection method 105, the in-bag detection method 105 processes the data that the first and second motion sensors 102, 108 have generated (and provided by respective output signals) during a configurable acquisition time window $W_i$ ($W_1$ for $i$=1, $W_2$ for $i$=2, ..., $W_N$ for $i$=N). At the start of an iteration i (block 116) in the recursive execution of the in-bag detection method 105, the in-bag detection method 105 retrieves from the memory 107 a consistency flag 117. The consistency flag 117 retrieved from the memory 107 during the execution of block 116 is the latter consistency flag 117 obtained in one of the previous iterations and stored in the memory 107 (at the first iteration $i$=1, the consistency flag 117 has not been stored in memory yet, and therefore it is not retrieved).

In an alternative embodiment, at the first iteration (iteration $i$=1) of the execution of the in-bag detection method 105, the consistency flag 117 has a value "low" (e.g., logic "0").

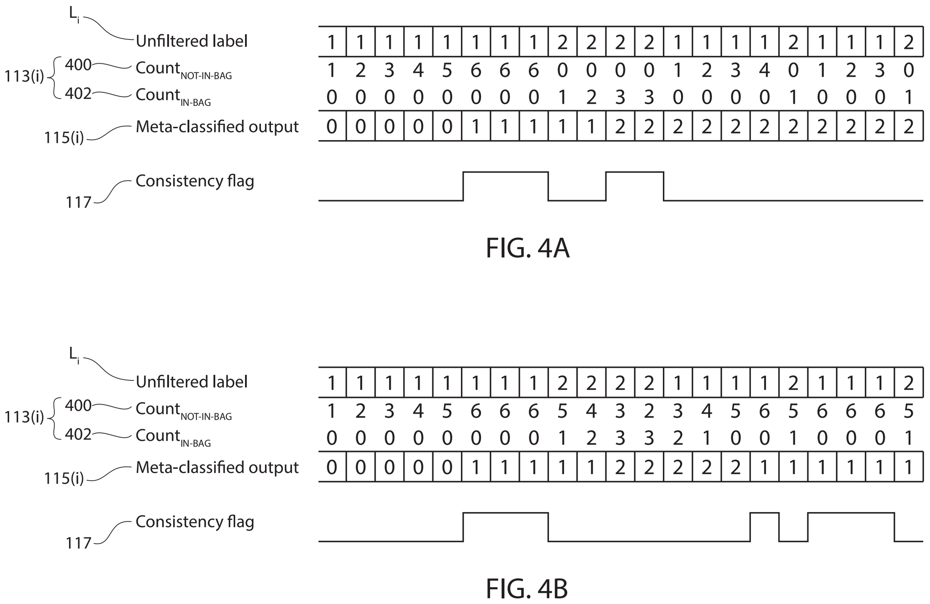

At each iteration after the first iteration $i$=1 (i.e., $i$=2, ..., $i$=N), a value "high" (e.g., logic "1") assigned to the consistency flag 117 indicates that a classification output 110 of the in-bag detection method 105 can be considered consistent enough to allow the in-bag detection method 105 to stop executing AI model (see later, block 106). In other words, the electronic device 101 has been determined to be in the same state (e.g., stored in a bag) for a consecutive number of iterations, and consequently for a timeframe, based on the metaclassifier counters values, as described in detail later (see Figures 4A, 4B and related description).

On the contrary, a value "low" (e.g., logic "0") assigned to the consistency flag 117 (or the consistency flag not being stored stored) indicates that a classification output 110 of the in-bag detection method 105 cannot be considered consistent enough to allow the in-bag detection method 105 to stop executing the AI model (block 106). In other words, the consistency flag 117 indicates whether one among the metaclassifier counters values has remained at a predefined maximum value, while the other metaclassifier counters value has remained at its predefined minimum value, as described in detail later (see Figures 4A, 4B and related description).

The classification output 110 represents the state (e.g., stored in a bag) of the electronic device 101 as detailed in the following.

During the iteration i, after retrieving the consistency flag 117, the in-bag detection method 105 proceeds to block 118. In block 118 the in-bag detection method 105 determines, based on the value of the consistency flag 117, if the classification output 110 has reached consistency. If the value of the consistency flag 117 is "high" (or "1"), block 118 returns a positive (YES) output, if the value of the consistency flag 117 is "low" (or "0"), block 118 returns a negative (NO) output.

As a result of a negative output of block 118 (exit NO of block 118), the execution of the in-bag detection method 105 proceeds to features computation block 104.

The features computation block 104 is configured to receive as inputs the output signal of the first motion sensor 102 within the configured acquisition time window Wi and, when the second motion sensor 108 is present, the output signal of the second motion sensor 108 within the configured acquisition time window Wi. The features computation block 104 is further configured to determine, based on the output signals of the first motion sensor 102 within the configured acquisition time window Wi, and of the second motion sensor 108 within the configured acquisition time window Wi when present, a plurality of features (in the following also named "motion-related features", without limiting the present disclosure) in the form of a set of statistical values associated to a corresponding set of statistical parameters of the output signals of the first and second motion sensors 102, 108. The plurality of motion-related features are indicative of a motion or movements to which the electronic device 101 has been subjected or underwent.

After determining the plurality of motion-related features, the execution of the in-bag detection method proceeds to an AI model execution block 106. The AI model execution block 106 receives as input the plurality of motion-related features determined by the features computation block 104. The AI model execution block 106 is configured to determine, based on said plurality of motion-related features, the state (e.g., stored in a bag) of the electronic device 101. The AI model execution block 106 assigns a label $L_i$ to the state of the electronic device 101. The label $L_i$ indicates for example whether or not the electronic device 101 is stored in a bag. The AI model execution block 106 then outputs the label $L_i$. The label $L_i$ is for example a number, such as (but not limited to) "1" for the "not-in-bag" state and "2" for the "in-bag" state.

After determining the state of the electronic device 101, the execution of the in-bag detection method 105 proceeds to a metaclassifier block 112. The metaclassifier block 112 is coupled to the output of the AI model execution block 106, and receives from the AI model execution block 106 the label $L_i$. In one embodiment, the metaclassifier block 112 implements a time-based voting method that acts as a low-pass filter on the label $L_i$ in order to improve the overall accuracy of the detection system 100. The metaclassifier block 112 outputs a plurality of meta-classification counters 113(i), as described in detail later, and a meta-classified output 115(i), indicating the state of the electronic device 101 (e.g., indicating whether or not the electronic device 101 is carried in a bag).

The meta-classified output 115(i) is then outputted from the application processor 103 to the memory 107 (block 126) and is stored in the memory 107 to be retrieved by the application processor 103 in subsequent iterations of the in-bag detection method 105, when required.

The output 110 of the in-bag detection method 105 (in the following, named as classification output 110) is the meta-classified output 115(i), which represents the state of the electronic device 101. In some embodiments, the classification output 110 is sent by the application processor 103 to a power management system of the electronic device 101. The power management system is configured to control power state transitions of the electronic device 101 based on the classification output 110, in a way that is not part of the present invention and therefore not further described.

The in-bag detection method 105 further includes a consistency flag computation block 114 coupled to an output of the metaclassifier block 112. The consistency flag computation block 114 receives as input the meta-classification counters 113(i) from the metaclassifier block 112. The consistency flag computation block 114 assigns the value (e.g., a logic value "high" or "1", or a logic value "low" or "0") to the consistency flag 117 and outputs the consistency flag 117, as described in detail later.

The consistency flag 117 generated by the in-bag detection method 105 during iteration i is then outputted from the application processor 103 to the memory 107, (block 128) and is stored in the memory 107. If a previous value has already been assigned to the consistency flag 117 and stored in the memory 107, the consistency flag 117 is updated with the latter value determined. The latter value of the consistency flag 117 can therefore be retrieved by the application processor 103 in subsequent iterations of the in-bag detection method 105 at block 116.

The execution of the in-bag detection method 105 then restarts from block 116, with a new iteration *i+1* of the in-bag detection method 105.

According to the present invention, as a result of a positive output of block 118 (exit YES of block 118), the execution of the in-bag detection method 105 proceeds to block 120, here named subset-of-features computation block 120.

The subset-of-features computation block 120 is configured to receive as input the output signal of the first motion sensor 102 (i.e., the accelerometer) within the configured acquisition time window Wi. In another embodiment, also the output signal of the second motion sensor 108 (i.e., the gyroscope) is used together with the output signal of the first motion sensor 102.

The subset-of-features computation block 120 is further configured to compute, based on the output signal of the first motion sensor 102 within the configured acquisition time window Wi, a subset of motion-related features, which is a subset of the plurality of motion-related features computed in block 104, and to output said subset of motion-related features. The subset of motion-related features is indicative of the type of movements to which the electronic device 101 is subject during the acquisition time window $W_i$.

After computing the subset of motion-related features, the execution of the in-bag detection method 105 proceeds to block 122. Block 122 receives as input the subset of motion-related features computed in the subset-of-features computation block 120. In block 122 the in-bag detection method 105 determines, based on said subset of motion-related features, if the electronic device 101 has been subjected to a significant motion, that is if the electronic device 101 has been subjected to a type of motion or movements indicative of a change of state of the device 101 (for example, the device 101 is subject to an acceleration that is indicative of the fact that the user is inserting the device 101 into a bag, or is retrieving the device 101 from the bag, or is moving the device 101, and so the in-bag detection method 105 needs to execute the AI model of block 106 to determine the state of the device 101). If the in-bag detection method 105 determines that the electronic device 101 has been subjected to a significant motion, block 122 returns a positive output (exit YES of block 122), otherwise it returns a negative output (exit NO of block 122). If the electronic device 101 has been subjected to significant motion its state might be changed, for example the electronic device 101 might have been retrieved from a bag, or it might have been put in the bag.

During iteration i, as a result of a positive output of block 122 (exit YES from block 122) indicating that the electronic device 101 has been subjected to a significant motion and therefore that its state might be changed (e.g., the electronic device 101 has been retrieved from a bag), the execution of the in-bag detection method 105 proceeds to the features computation block 104, and to the following blocks as previously described.

During iteration i, as a result of a negative output of block 122 (exit NO from block 122) indicating that the electronic device 101 has not been subjected to significant motion, and therefore that its state might not be changed (e.g., the electronic device 101 continues to be stored in a bag), the execution of the in-bag detection method 105 proceeds to a meta-classified output-retrieval block 124.

The meta-classified output-retrieval block 124 retrieves from the memory 107 the meta-classified output 115($i$-$k$), where k=1, $k$=2, ..., $k$=i-1 and depends on the iteration where the meta-classified output was stored in memory. The meta-classified output 115(i-k) has been determined, by the metaclassifier block 112, during one of the previous iteration i-k, based on the label $L_{i-k}$. The label $L_{i-k}$ has been assigned to the plurality of motion-related features obtained from the output sensors signals acquired during the acquisition time windows $W_{i-k}$. The meta-classified output retrieval block 124 then returns the meta-classified output 115($i$-$k$) as the current meta-classified output 115($i$) associated to the current iteration i.

The meta-classified output 115($i$) is then output from the application processor 103 to the memory 107 (block 126) and is stored in the memory 107 to be retrieved by the application processor 103 in subsequent iterations of the in-bag detection method 105, if and when required.

The meta-classified output 115(i), outputted from the meta-classified output retrieval block 124, is the classification output 110 of the in-bag detection method 105, and represents the state of the electronic device 101. In some embodiments, the classification output 110 is sent by the application processor 103 to the power management system of the electronic device 101. The power management system is configured to control power state transitions of the electronic device 101 based on the classification output 110, in a way that is not part of the present invention and therefore not further described.

Once the classification output 110 is generated, the execution of the in-bag detection method 105 restarts from block 116, with a new iteration *i+1* of the in-bag detection method 105.

It is noted that, as a result of a negative output from block 122 (exit NO) during iteration *i*, the value of the consistency flag 117 is not updated, and during iteration *i+1* in block 116 the latter stored value of the consistency flag 117 obtained in one of the previous iterations is retrieved.

Components of the detection system 100 relevant for the present invention are further described in detail in the following.

First and second motion sensors 102, 108

In an embodiment, the first motion sensor 102 is an accelerometer of the electronic device 101. It is noted that although only one first motion sensor 102 is shown in Figure 1, in other embodiments a plurality of first motion sensors 102 are included in the electronic device 101 (e.g., two or more accelerometers placed at different locations of the electronic device 101). As a non-limiting example, the electronic device 101 having the first motion sensor 102 is a laptop computer having an accelerometer coupled or attached to a base of the laptop computer. As another non-limiting example, the electronic device 101 having the first motion sensor 102 is a tablet having an accelerometer included within the tablet. The first motion sensor 102 is configured to sense vibration or acceleration of the electronic device 101 in each axis of motion. For example, the first motion sensor 102 generates first sensor data 102x, 102y, 102z that are indicative of vibration or acceleration of the electronic device 101 in a triaxial reference system of axis x, y, z; in particular the first motion sensor 102 generates first sensor data 102x, 102y, 102z that are indicative of a respective vibration or acceleration of the electronic device 101 in a lateral axis (x axis), in a longitudinal axis (y axis), and in a vertical or normal axis (z axis).

Use of the first sensor data 102x, 102y, 102z from the first motion sensor 102 enables the detection system 100 to determine the state of motion of the electronic device 101, in particular to determine whether the electronic device 101 is being stored in a bag and/or carried in the bag and/or inserted in the bag and/or removed from the bag.

In other embodiments, the detection can be improved with the use of the second motion sensor 108 in conjunction with the first motion sensor 102. In an embodiment, the second motion sensor 108 is a gyroscope of the electronic device 101. It is reiterated that the use of the second motion sensor 108 (and consequently, the data generated by the second motion sensor 108) is optional. For example, in low-power or low-cost implementations of the detection system 100, the second motion sensor 108 and the data therefrom may not be present or used by the AI model execution block 106 to determine whether or not the electronic device 101 is being stored in a bag. In an embodiment, the second motion sensor 108 is configured to measure a rate at which the electronic device 101 rotates around each axis x, y, z of motion. For example, the second motion sensor 108 generates second sensor data 108x, 108y, 108z that are indicative of the rotation rate of the electronic device 101 around the x-axis, the y-axis, and the z-axis, respectively.

It is noted that the first sensor data 102x, 102y, 102z and the second sensor data 108x, 108y, 108z depend, at least in part, on a placement or orientation of the electronic device 101. As an example, the electronic device 101 may be placed on an inclined plane, a flat plane, on a part of the human body (e.g., a lap), or on an inanimate object (e.g., a desk). The first sensor data 102x, 102y, 102z and the second sensor data 108x, 108y, 108z are indicative of such a placement or orientation of the electronic device 101.

Acquisition time windows W

For each iteration ($i=1$, $i=2$, ..., $i=N$) of the in-bag detection method 105, the first sensor data 102x, 102y, 102z and the second sensor data 108x, 108y, 108z are collected in respective acquisition time window $W_i$ ($W_1$ for $i=1$, $W_2$ for $i=2$, ..., $W_N$ for $i=N$). In each acquisition time window $W_i$ the first sensor data 102x, 102y, 102z and the second sensor data 108x, 108y, 108z are sampled at a plurality of sampling time $t_j$. Therefore, in each acquisition time window $W_i$, the first sensor data 102x, 102y, 102z and the second sensor data 108x, 108y, 108z include respectively a plurality of first sensor data samples 102x(j), 102y(j), 102z(j) and a plurality of second sensor data samples 108x(j), 108y(j), 108z(j).

A maximum number $N_j$ of sampling times $t_j$, and correspondingly a maximum number $N_j$ of first sensor data samples 102x(j), 102y(j), 102z(j) and of second sensor data samples 108x(j), 108y(j), 108z(j), collected in each acquisition time window $W_i$, depends on a predefined duration of the acquisition time window $W_i$ and on a sampling frequency, as detailed in the following. In other words, during each iteration ($i=1$, $i=2$, ..., $i=N$) of the in-bag detection method 105, in respective acquisition time window $W_i$ ($W_1$ for $i=1$, $W_2$ for $i=2$, ..., $W_N$ for $i=N$), are collected $N_j$ first sensor data samples 102x(j), 102y(j), 102z(j) and $N_j$ second sensor data samples 108x(j), 108y(j), 108z(j).

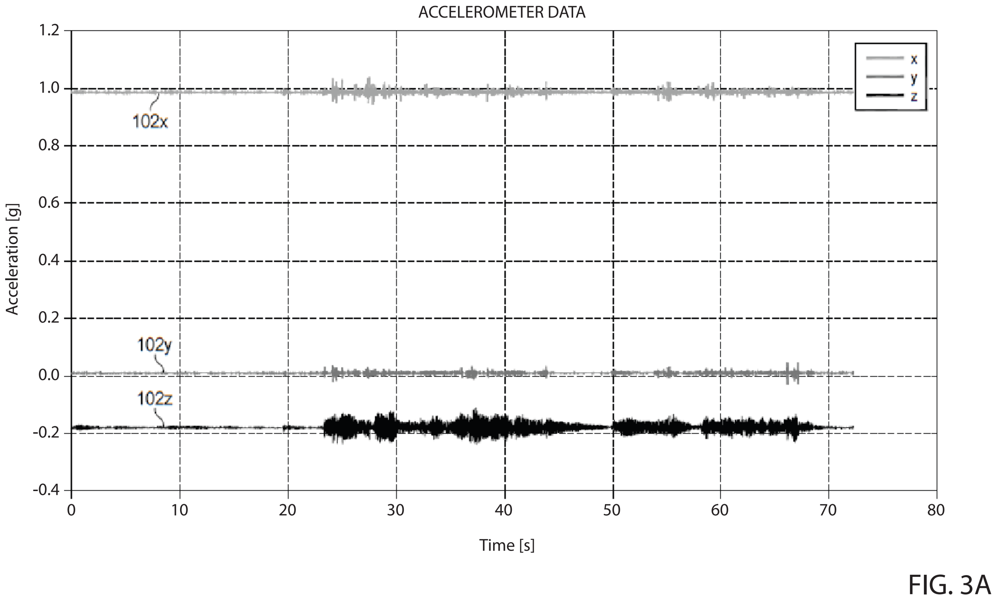

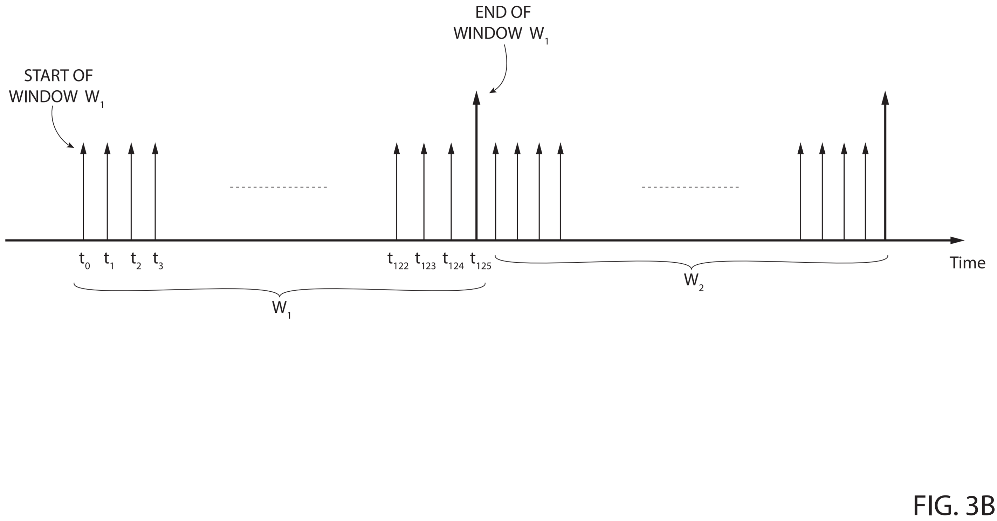

Figure 3A shows an example of the first sensor data 102x, 102y, 102z that is generated by the first motion sensor 102 over a plurality of acquisition time windows. Figure 3B shows a zoomed-in view of sampling times $t_j$ of the first two acquisition time windows $W_1$, $W_2$ of the example of Figure 3A.

As illustrated in Figure 3B, in an embodiment the plurality of acquisition time windows are consecutive and non-overlapping windows of time. However, in another embodiment, overlapping acquisition time windows are also possible.

In the example of Figure 3B, the first acquisition time window $W_1$ starts at time $t_0$ (j=0) and ends at time $t_{125}$ (j=125). In an embodiment, such as in the examples of Figures 3A and 3B, each acquisition time window has a duration of 2.5 seconds and includes $N_j = 125$ samples (e.g., corresponding to a 50 Hz sampling frequency). Consequently, in the example of Figure 3A, there are about 29 acquisition time windows and a total about 3625 samples (i.e., 125 samples for each of the 29 acquisition time windows). It is noted that each sample includes a complete dataset (e.g., x-axis data 102x(j), y-axis data 102y(j), and z-axis data 102z(j)). It is also noted that the 50 Hz sampling frequency and the 2.5 seconds duration for each acquisition time window $W_i$ are merely examples, and other embodiments are envisioned where different sampling frequencies and different time durations are used.

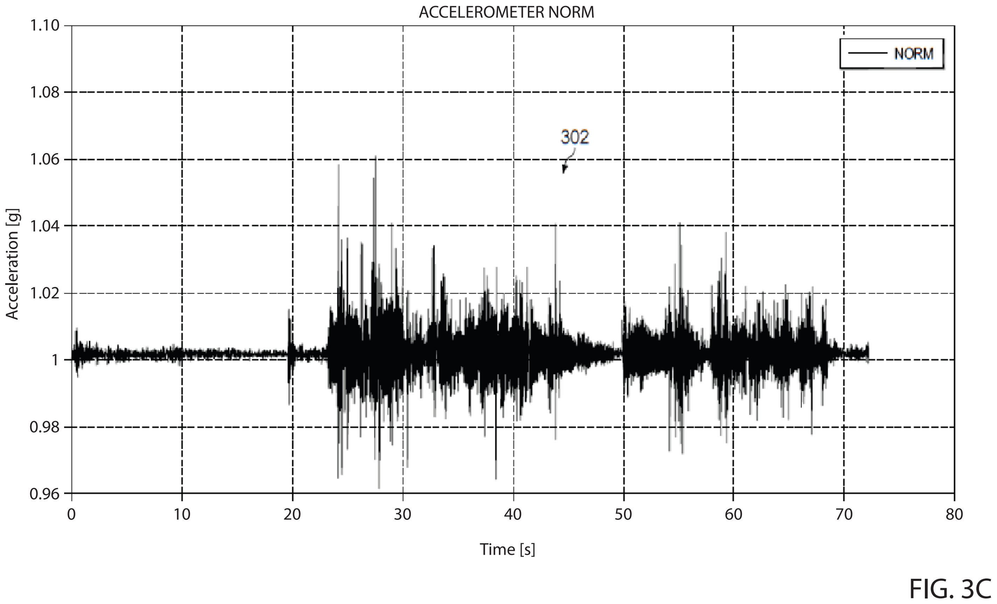

Figure 3C shows an exemplary norm 302 of the first sensor data 102x, 102y, 102z in Figure 3A, calculated as described later. The norm 302 at a given sampling time $t_j$ (norm(j)) may be indicative of the magnitude of the first sensor data sample 102x(j), 102y(j), 102z(j) at the given sampling time $t_j$.

Features computation block 104

The features computation block 104 receives the output signal of the first motion sensor 102 and, when present, the output signal of the second motion sensor 108, including respective components acquired within the acquisition time window $W_i$. In an embodiment, the output signal of the first motion sensors 102 (analogously, of the second motion sensor 108) within the acquisition time window $W_i$ include the following exemplary components (more components may be calculated, or some of the following may not be calculated) :

- the first sensor data 102x, 102y, 102z, including $N_j$ first sensor data samples 102x(j), 102y(j), 102z(j);
- the norm including $N_j$ norm(j) samples of the norm of each first sensor data samples 102x(j), 102y(j), 102z(j) within the acquisition time window $W_i$, determined as follows:

$$norm(\text{j}) = \sqrt{102\text{x(j)} * 102\text{x(j)} + 102\text{y(j)} * 102\text{y(j)} + 102\text{z(j)} * 102\text{z(j)}}$$

- the square of the norm including $N_j$ samples norm_sq(j) of each first sensor data samples 102x(j), 102y(j), 102z(j) within the acquisition time window $W_i$, determined as follows:

$$norm\_sq(j) = 102\text{x(j)} * 102\text{x(j)} + 102\text{y(j)} * 102\text{y(j)} + 102\text{z(j)} * 102\text{z(j)}$$

- the first sensor data 102x, 102y, 102z, the norm and the norm square within the acquisition time window $W_i$, filtered by a first band-pass filter with cut-off frequencies at 1.5 Hz and 2.5 Hz;
- the first sensor data 102x, 102y, 102z, the norm and the norm square within the acquisition time window $W_i$, filtered by a second band-pass filter with cut-off frequencies at 7.5 Hz and 8.5 Hz.

In an embodiment, the norm(j) and the norm_sq(j) samples within the acquisition time window $W_i$ are stored in a buffer memory register included in the application processor 103, for example in memory 107.
In another embodiment, all the sensor data, the norm and the square of the norm are not stored in buffer and the features calculation is implemented iteratively each time that a new motion sensor is generated.
From the output signal of the first motion sensors 102 (and analogously of the second motion sensor 108 when present), the features computation block 104 calculates, for each of the above components, the following plurality of motion-related features (which are statistical parameters associated to the output signal of the first motion sensors 102 and, analogously, of the second motion sensor 108 when present) :

- the mean of the component within the acquisition time window $W_i$;
- the energy of the component within the acquisition time window $W_i$, determined as the sum of the square value of each sample within the acquisition time window $W_i$;
- the variance of the component within the acquisition time window $W_i$;
- the minimum value of the component within the acquisition time window $W_i$;
- the maximum value of the component within the acquisition time window $W_i$;
- the peak-to-peak value of the component within the acquisition time window $W_i$;
- the number of crossing of the mean value (also named "mean-cross value" in the following) of the component within the acquisition time window $W_i$;
- the number of peaks (both positive and negative peaks) of the component within the acquisition time window $W_i$;

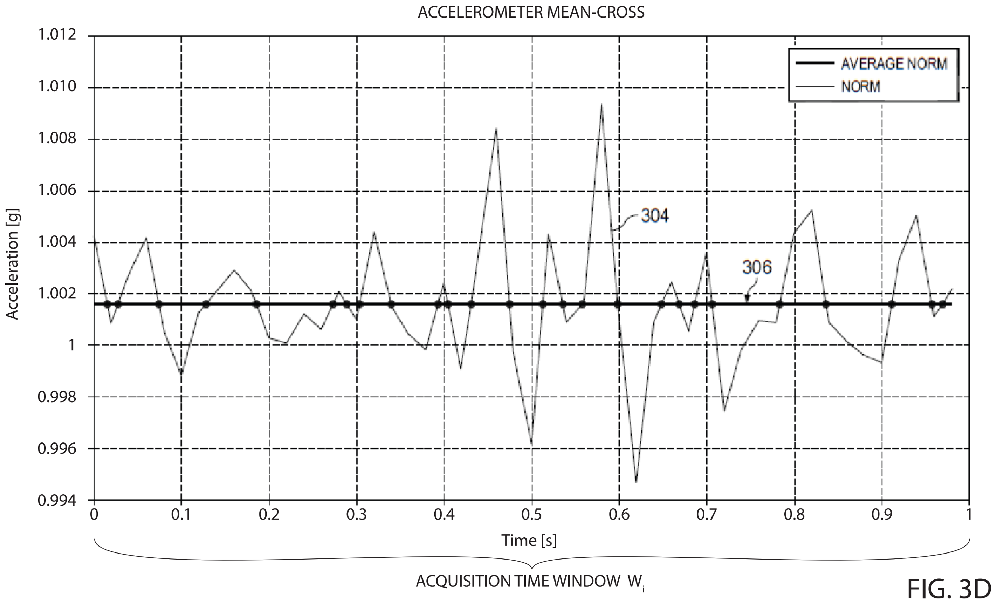

Therefore, in the above example, the features computation block 104 calculates, for each acquisition time window $W_i$, 120 values of motion-related features associated to the first motion sensor 102 and analogously 120 values of motion-related features associated to the second motion sensor 108.
The mean-cross value denotes the number of times the norm within the acquisition time window $W_i$ crosses the mean of the norm within the acquisition time window $W_i$. An illustration is given in Figure 3D, which shows a norm 304 within the acquisition time window and a mean 306 of the norm 304 within the acquisition time window $W_i$. In the example of Figure 3D, there are 26 times when the norm 304 within the acquisition time window $W_i$ crosses the mean 306 of the norm within the acquisition time window $W_i$. These instances are depicted as points of intersection of the curve 304 and the line 306. Consequently, the mean-cross value for the example of Figure 3D is 26.

The variance of each component within the acquisition time window $W_i$ is determined as follows:

$$variance = \frac{\sum_1^n (x_i - x_{mean})^2}{n-1}$$

where n is the number of samples of the component within the acquisition time window $W_i$ (e.g., 125 in the case of a 50 Hz sampling frequency over a 2.5 seconds time window), $x_i$ is the i-th sample within the acquisition time window $W_i$, and $x_{mean}$ is the mean of the samples within the acquisition time window $W_i$.

In some embodiments, the motion-related features are calculated iteratively, avoiding allocating buffer memory registers for the computation of said features, and therefore saving computational resources. For example, in an embodiment, the variance and the mean of the component within the acquisition time window $W_i$ are computed iteratively by exploiting the Welford method.

Filters

The above-mentioned first bandpass filter may be implemented as a second order IIR Butterworth filter. The above-mentioned second bandpass filter may be implemented as a second order IIR Butterworth.

The transfer function of the IIR 2nd order filters that can be used in this context is the following:

$$H(z) = \frac{b_1 + b_2 z^{-1} + b_3 z^{-2}}{1 + a_2 z^{-1} + a_3 z^{-2}}$$

The filters outputs can therefore be defined as:

$$y(z) = H(z) \cdot x(z)$$

$$y'(z) = y(z) \cdot Gain$$

Different kinds of filters may be used (high-pass, band-pass, 1st order IIR, 2nd order IIR), according to the needs; the filter coefficients are configurable accordingly. The IIR filter coefficients can be computed with different tools, including Matlab, Octave and Python, in a way that is apparent to the skilled person.

AI model execution block 106

The AI model execution block 106 is run after the acquisition time window $W_i$ ends and after the plurality of motion-related features are calculated by the entirety of features computation block 104.

In some embodiments, the AI model execution block 106 is configured to determine whether or not the electronic device 101 is, for example, stored in a bag during the acquisition time window $W_i$, based on the plurality of motion-related features for each acquisition time window $W_i$.

In an embodiment, the AI model execution block 106 is a supervised machine learning classifier implemented using machine learning techniques, examples being logistic regression, naive Bayes classifier, support vector machines, decision trees, boosted trees, random forest, neural networks, nearest neighbor, among others.

The AI model execution block 106 is configured to assign the label $L_i$ to each acquisition time window $W_i$, with such label $L_i$ indicating the state of motion the electronic device 101 during the acquisition time window $W_i$. In particular, each value assigned to the label $L_i$ indicates a corresponding class. Each class is assigned, based on the plurality of motion-related features, by the supervised machine learning classifier of the AI model execution block 106 to the acquisition time window $W_i$. Each class indicates the state of motion the electronic device 101 during the acquisition time window $W_i$.

In particular, the label $L_i$ indicates whether or not the electronic device 101 was stored in a bag during the acquisition time window $W_i$.

In the supervised machine learning classifier of the AI model execution block 106, labeled training data can be obtained, in a non-limiting example, by storing the electronic device 101 (including the first motion sensor 102 and, optionally, the second motion sensor 108) in a bag and carrying it while performing different activities (e.g., walking, driving, etc.) and logging the first sensor data 102x, 102y, 102z and the second sensor data 108x, 108y, 108z for different orientations and positions of the electronic device 101 in the bag. The first sensor data 102x, 102y, 102z and the second sensor data 108x, 108y, 108z for these different orientations and positions are known to have been obtained when the electronic device 101 was being stored in a bag. Consequently, such first sensor data 102x, 102y, 102z and second sensor data 108x, 108y, 108z are then used as input for the features computation block 104, to obtain the plurality of motion-related features for various acquisition time windows $W_i$, and such plurality of motion-related features are subsequently assigned the label $L_i$ indicating that the electronic device 101 is stored in a bag.

In an embodiment, training the supervised machine learning classifier of the AI model execution block 106 involves the generation of a matrix consisting of a number of rows equal to the number of acquisition time windows $W_i$ processed (for example, from a log of 25 seconds duration, 10 acquisition time windows $W_i$ of 2.5 seconds are generated) and 241 columns containing the 240 motion-related feature values (the above-mentioned 120 values for the first motion sensor 102 and the 120 values for the second motion sensor 108) computed for each acquisition time window $W_i$, and the class (the label $L_i$) associated with each acquisition time window $W_i$. The matrix is then used as input for training the supervised machine learning classifier.

In a non-limiting exemplary embodiment, the AI model execution block 106 processing capability is obtained through a decision-tree logic. As stated above, in other exemplary embodiments the processing capabilities of the AI model execution block 106 may be obtained, for example, through logistic regression, or naive Bayes classifier, or support vector machines, or boosted trees, or random forest, or neural networks, or nearest neighbor, or even other algorithms.

A decision tree is known to be a mathematical tool formed by a series of configurable nodes. Each node is characterized by an "if-then-else" condition, where an input signal (represented by statistical parameters calculated from the sensor data, wherein the statistical parameters are the plurality of the motion-related features computed in block 104) is evaluated against a threshold. The AI model execution block 106 can be configured to run one decision tree or a plurality (e.g., up to eight) of decision trees simultaneously and independently. The decision trees are stored in the application processor 103 and generate results in dedicated output registers. The results of the decision tree can be read from the application processor 103 at any time. Furthermore, it is possible to generate an interrupt for every change in the result in the decision tree.

The decision tree is the predictive model built from the training data. Decision trees are per se known in the art, and readily available to the skilled person. The training data are the data logs acquired for each label $L_i$ to be recognized.

The outputs of features computation block 104 described previously are the inputs of the decision tree.

Each node of the decision tree contains a condition, wherein an motion-related feature is evaluated against a predefined threshold. If the condition is true, the next node in the true path is evaluated. If the condition is false, the next node in the false path is evaluated. The status of the decision tree will evolve node by node until a result is found. The result of the decision tree is one of the classes defined at the beginning of the data collection. The decision tree generates a new result every acquisition time window $W_i$. The AI model execution block 106 results (the labels $L_i$) are accessible through dedicated registers. These registers can be continuously read (polled) to check the decision tree outputs.

Metaclassifier block 112

To further enhance the accuracy of the determination of the state of motion of the electronic device 101, in particular the accuracy of the determination of whether or not the electronic device 101 is stored in a bag, the in-bag detection method 105 includes the metaclassifier block 112.

In an embodiment, the metaclassifier block 112 is configured to determine the number of consecutive occurrences of the label $L_i$ returned by the AI model execution block 106. Consecutive occurrences of the label $L_i$ refers to consecutive occurrences of a same value of the label $L_i$ obtained during corresponding consecutive iterations of the in-bag detection method 105. If the number of consecutive occurrences overcomes a threshold, the meta-classified output 115(i) of the metaclassifier block 112 is changed. Otherwise, the previous state is kept. As such, the metaclassifier block 112 can be used to low-pass filter the output of the AI model execution block 106 (e.g., to avoid glitches and spurious false positives).

In other words, the metaclassifier block 112 acts on the label $L_i$ of the AI model execution block 106, and is used to stabilize the classification. In particular, for each class supported by the AI model execution block 106 (i.e. for each possible value of the label $L_i$) a meta-classification counter 113(i) is allocated, and a threshold number of consecutive classifications is configured. When a class is detected, the meta-classification counter 113(i) corresponding to said class is incremented, while the meta-classification counter 113(i) corresponding to other classes are decremented (or reset, depending on the implementation choice). When a meta-classification counter 113(i) reaches the previously configured threshold number of consecutive classifications for that class, then the meta-classified output 115(i) is validated.

In an exemplary embodiment illustrated in Figure 4A (analogously, figure 4B), the label $L_i$ returned by the AI model execution block 106 is used in the metaclassifier block 112 (in the following, the label $L_i$ returned by the AI model execution block 106 is named "unfiltered label"); two meta-classification counters 113 (i) ($count_{NOT-IN-BAG}$ 400, and $count_{IN-BAG}$ 402) are used to convert the unfiltered label $L_i$ into what can now be called a filtered output, the meta-classified output 115(i). The first of the meta-classification counters 113(i) $count_{NOT-IN-BAG}$ 400 represents a count that is incremented by 1 each time the unfiltered label $L_i$ output by the AI model execution block 106 has returned a "not-in-bag" state and the second one of the meta-classification counters 113(i) $count_{IN-BAG}$ 402 represents a count that is incremented by 1 each time the unfiltered label $L_i$ output by AI model execution block 106 has returned in-bag.

Figure 4A is a depiction of a non-limiting exemplary operation of the metaclassifier block 112 when the meta-classification counters 113(i) are operated in a reset mode, wherein a meta-classification counter 113 (i) (e.g., $count_{IN-BAG}$ 402) is reset to a count of zero once the opposite meta-classification counter 113(i) (e.g., $count_{NOT\_IN\_BAG}$ 400) has incremented. In Figure 4A, unfiltered label $L_i$ represents a classification (1 meaning not-in-bag, 2 meaning in-bag) plotted in acquisition time windows. The unfiltered label $L_i$ is updated each time a first motion sensor's 102 buffer is full (e.g., every 2.5 seconds). The $count_{NOT-IN-BAG}$ 400 is incremented by 1 up to a configurable maximum count (e.g., a maximum value of 6) every time the unfiltered $L_i$ is a 1 (meaning the AI model execution block 106 determined, based on the plurality of motion-related features, that the electronic device is not-in-bag) plotted in acquisition time windows. The meta-classifier's $count_{IN-BAG}$ 402 is incremented by 1 up to a configurable maximum count (e.g., a maximum value of 3) every time the unfiltered label $L_i$ is a 2 (meaning the AI model execution block 106 determined, based on the plurality of motion-related features, that the electronic device is in-bag) plotted in acquisition time windows. The meta-classified output 115(i) is the output from the metaclassifier block 112 and represents a classification (0 meaning undetermined, 1 meaning not-in-bag, 2 meaning in-bag) based on the meta-classification counters 113(i) values plotted in acquisition time windows.

The meta-classified output 115(i) is then determined by taking the returned values of the meta-classification counters 113(i), where the corresponding value of the meta-classified output 115(i) is only changed from a reported value once the corresponding meta-classification counter 113(i) has reached the corresponding maximum value, which is a configurable limit (in the embodiment depicted in Figure 4A, this value is 6 for the $count_{NOT\_IN\_BAG}$ 400, and is 3 for the $count_{IN-BAG}$ 402). A meta-classification counter can't increment beyond its configurable maximum value.

In this embodiment, the values of the meta-classification counters 113(i) are used to make a consistency condition that depends on how the meta-classification counters 113(i) are handled by the metaclassifier block 112, as detailed in the following section.

Consistency flag computation block 114

The consistency of the electronic device 101 depends on whether the electronic device 101 has been determined to be in the same state for a predefined number M of iterations i, and consequently for a predefined timeframe, the duration in time of each iteration depending at least in part on the duration of the acquisition time windows $W_i$. In an embodiment, the duration of one iteration i equals the duration of one or more acquisition time windows $W_i$ (duration of one $W_i$ is, for example, 2.5 seconds). For example, M is in the range 3-10. In an embodiment, a specific predefined number M of iterations required to each consistency is assigned to each possible class (to each possible value of the label $L_i$).

The consistency of the state (e.g., in-bag or not-in-bag) of the electronic device 101 is reached if the state has remained unchanged for said predefined number M of iterations. When the consistency of the state is reached, the consistency flag 117 is set to "high" value (e.g., logic "1").

Figure 4A illustrates, according to a non-limiting embodiment, the operation of the consistency flag computation block 114 where the exemplary unfiltered label $L_i$, meta-classified output 115(i), $count_{NOT\_IN\_BAG}$ 400 and $count_{IN-BAG}$ 402 (originating from the metaclassifier block 112) are used to determine the value ("high" or "low") of the consistency flag 117.

If a meta-classification counter 113(i) has reached its configurable maximum value, the corresponding state determination is returned as the meta-classified output 115(i), and the consistency flag 117 is set to the high value.

In Figure 4A, the binary "high" ("1") or "low" ("0") consistency flag 117 shows a visual depiction of how the unfiltered label $L_i$ and meta-classified output 115(i), as well as the meta-classification counters 113(i), correspond to the associated consistency classification. The consistency flag 117 is evaluated every time a new unfiltered label $L_i$ is generated (e.g., every 2.5 seconds).

For the meta-classification counters reset case, as illustrated in Figure 4A, the metaclassifier block 112 takes the unfiltered label $L_i$ as input and uses the $count_{NOT-IN-BAG}$ 400, and $count_{IN-BAG}$ 402 to return the meta-classified output 115(i). This is accomplished by incrementing the corresponding counter based on the returned unfiltered label $L_i$ (a returned value of 1 for the unfiltered label $L_i$ corresponds to incrementing the $count_{NOT\_IN\_BAG}$ 400, and a returned value of 2 for the unfiltered label $L_i$ corresponds to incrementing the $count_{IN-BAG}$ 402) . Should the opposing meta-classification counter 113(i) increment by one, the other meta-classification counter 113(i) is reset to zero in this embodiment.

The consistency flag 117 is determined by either one meta-classification counter 113(i) ($count_{NOT\_IN\_BAG}$ 400, or $count_{IN-BAG}$ 402) attaining their maximum value (or remaining at their maximum value), where the consistency flag 117 will remain in the high state so long as one meta-classification counter 113(i) is equal to its maximum value, and the other meta-classification counter 113(i) is zero. The consistency flag 117 can therefore be used to determine whether the classification output 110 has been stable over the above-mentioned predefined number M of iterations.

In another embodiment, Figure 4B, the meta-classification counters 113(i) can be operated in a decrement mode where a meta-classification counter 113(i) (e.g., $count_{IN-BAG}$) is decreased by one once the opposite meta-classification counter 113(i) (e.g., count$_{NOT-IN-BAG}$) has incremented by one. In this embodiment, when one meta-classification counter 113(i) is equal to its maximum value, the other meta-classification counter 113(i) might require more time to reach the value zero, so the consistency flag 117 will take more time to be set to "high" value (e.g., logic "1") with respect if operated in a reset mode as in Figure 4A.

Subset of features computation block 120

The subset of features computation block 120 is executed when it is determined, at block 118, that the consistency flag 117 is equal to "high" value (e.g., logic "1"), meaning that one meta-classification counter is equal to its maximum value (for example predefined to 3 or 6), and the other meta-classification counter is equal to its minimum value (for example predefined to zero).

The subset of features computation block 120 computes a subset of the plurality of motion-related features described with reference to the features computation block 104. In a non-limiting exemplary embodiment, the subset of features computation block 120 determines one feature, namely the peak-to-peak value of the norm of the data 102x, 102y, 102z of the first motion sensor 102 (the norm signal is for example shown in Figure 3D, signal 304).

As already discussed, the norm of each sample within the acquisition time window $W_i$ is determined as follows:

$$norm(j) = \sqrt{102x(j) * 102x(j) + 102y(j) * 102y(j) + 102z(j) * 102z(j)}$$

The norm signal (e.g., the norm 304 of Figure 3D) is then filtered by the first band-pass filter with cut-off frequencies at 1.5 Hz and 2.5 Hz.

Therefore, if the consistency flag 117 is determined to be equal to "high" value (e.g., logic "1"), the in-bag detection method 105 calculates a single value assigned to the filtered norm signal, instead of the 240 values described with reference to the features computation block 104. This results in a reduction of the computational costs and of the power consumption associated with the execution of the in-bag detection method 105, without the need for allocating an external timer to pause the execution of the method when the consistency condition is reached.

Significant motion - block 122

During iteration *i*, at block 122 the in-bag detection method 105 determines, based on the subset of features calculated by the subset of features computation block 120, whether the electronic device 101 has been subject to significant motion in the considered acquisition time window $W_i$. In one embodiment, at block 122 the calculated peak-to-peak value of the filtered norm signal is compared to a predefined threshold value. If the peak-to-peak value exceeds the threshold value, the electronic device 101 is considered to have been subjected to significant motion. In this case, the state of motion of the electronic device 101 might be changed compared to the state of motion of the electronic device 101 determined at iteration *i-1,* and the in-bag detection method 105 proceeds to the features computation block 104 to determine the novel state of the electronic device 101.

If, on the other hand, the peak-to-peak value does not exceed the threshold value, the electronic device 101 is considered not to have been subjected to significant motion in the considered acquisition time window $W_i$. Therefore, the state of motion of the electronic device 101 is considered not to have changed with respect to the past iteration of the execution of the in-bag detection method 105. The in-bag detection method 105 therefore proceeds to the execution of the meta-classified output-retrieval block 124.

Meta-classified output-retrieval block 124

In order to save computational resources and power, when the electronic device 101 is considered not to have been subjected to significant motion in iteration *i* (output NO from block 122), a new meta-classified output 115(i) is not determined. Since the state of motion of the electronic device 101 is considered not to have changed during the iteration i compared to the state of motion determined in iteration *i-1,* the meta-classified output 115(i-k) is retrieved from memory 107 by the meta-classified output-retrieval block 124, stored in memory 107 as the current meta-classified output 115(i) and outputted as classification output 110.

When the electronic device 101 has not been subjected to significant motion, retrieving the past meta-classified output 115(i-k) instead of determining a new meta-classified output 115(i) through blocks 104, 106 and 112, allows saving computational resources and power.

From what has been described above, the advantages of the present invention emerge clearly.

Briefly, the in-bag detection method 105 computes a plurality of features from sensors data and, through an AI model, performs a classification of the state of motion of the device based on the plurality of features. The in-bag detection method 105 then performs a meta-classification over an output of the AI model by using counters for each of the values that the output can assume to check for consistency of the output. Once the counters of the metaclassifier of the output of the AI model have reached consistency (i.e., one counter has reached the maximum value while the other counters have reached 0), an inbuilt stability mechanism is triggered. The inbuilt stability mechanism does not require allocation of timers or other external resources. In detail, instead of calculating the entire plurality of features needed by the AI models, only a subset of features related to motion is calculated. If this subset of features reports significant motion of the electronic device, the execution is continued as usual: the other features are calculated, the AI model is executed, and the meta-classified output is returned as output of the library. If instead this subset of features reports no significant motion of the device, the other features are not calculated, and the AI model is not executed. The previous meta-classified output is retrieved and is returned as output of the software library. The retrieval of the previous meta-classified output allows therefore to save computing resources and to reduce the power consumption associated with the execution of the software library by avoiding the execution of the AI model.

Moreover, the stability mechanism implemented directly in the in-bag detection method 105 through blocks 114, 128, 116, 118, 120, 122 and 124 allows reducing the power consumption associated with the execution of said software library without allocating a dedicated timer or other additional resources to pause the execution when consistency of the classification output 110 is reached.

Moreover, even though in the present description reference has been made to the plurality of motion-related features computed in block 104 being statistical parameters, in a different embodiment said motion-related features may be deterministic parameters or other type of parameters, or even a mix of statistical and deterministic parameters.

Furthermore, even though the use of a single consistency flag 117 has been described, a plurality of consistency flags may be used. For example, each consistency flag of the plurality of consistency flags may indicate respectively the consistency of an activity to which the electronic device is being subject (e.g., "device kept steady", "device being carried while walking"), the consistency of how the electronic device is being carried (e.g., "handheld", "not handheld"), and the consistency of an orientation of the electronic device (e.g., "flat on a surface", "not flat"). An overall consistency condition and a corresponding overall consistency flag may therefore be defined, for example, based on the simultaneous occurrence of all the consistency conditions indicated by each of the consistency flags of the plurality of consistency flags.

Moreover, in some embodiments, the AI model execution block 106 may provide one or more scores or "confidence index" indicating a probability that a label $L_i$ is correctly assigned to a state of the electronic device, and a consistency flag may be generated based on said one or more scores.

In general, whenever the consistency condition (or the overall consistency condition) is not verified, the AI model execution block 106 has to be executed in order to determine the state of motion of the electronic device 101, based on the plurality of features computed by the feature computation block 104. On the contrary, whenever the consistency condition (or the overall consistency condition) is verified, the execution of the feature computation block 104 and of the AI model execution block 106 can be avoided, saving power resources.

The subset-of-features computation block 120 and block 122 are then executed in order to determine whether or not it is necessary to restart the execution of the feature computation block 104 and of the AI model execution block 106. Even though block 122 has been described as comparing the peak-to-peak value of the filtered norm signal calculated by the subset-of-features computation block 120 to a predefined threshold value, other approaches are possible. For example, in another embodiment the subset-of-features computation block 120 may compute a plurality of parameters, and block 122 may determine whether the electronic device has been subject to a significant motion based on said plurality of parameters.

Alternatively, in yet another embodiment, the subset-of-features computation block 120 may not be present. In such embodiment, when the consistency condition (or the overall consistency condition) is verified, the execution of the in-bag detection method is completely stopped, until a wake-up signal is generated and provided by the first motion sensor 102. Block 122 then determines that the device has been subject to a significant motion based on the wake-up signal provided by the first motion sensor 102, restarting the execution of the in-bag detection method.

Finally, even though in the present description reference has been made to an in-bag detection method, it is noted that a stability mechanism analogous to the one previously described can be exploited in different software libraries executing AI/ML models (e.g., on-table detection software libraries) when said software libraries are executed in context with strict power consumption requirements.

**Claims**

1.   A method (105) comprising the steps of:

      i) generating a set of values by calculating a set of parameters (104) using first sensor data (102x, 102y, 102z) generated by a first motion sensor (102);

ii) determining whether the electronic device (101) is consistently or stably in a first state of motion, or consistently or stably in a second state of motion, different from the first state of motion, based on the set of values (104); and

if the electronic device (101) is consistently or stably in a first state of motion or in the second state of motion:

generating a further value by calculating one parameter (120) using the first sensor data (102x, 102y, 102z), wherein said one parameter (120) is comprised in said set of parameters (104); and
determining whether the device has remained consistently or stably in said first state of motion or in said second state of motion based on said further value.

2. The method according to claim 1, wherein determining whether the electronic device (101) is consistently or stably in the first state of motion or in the second state of motion comprises the steps of:

iii) counting, by a first counter (400), a first number of iterations of said method, from a predefined first minimum value up to a predefined first maximum value, during which the electronic device (101) is in the first state of motion, and generating a first counting variable ($Count_{NOT\_IN\_BAG}$) indicative of said first number of iterations;
iv) counting, by a second counter (402), a second number of iterations of said method, from a predefined second minimum value up to a predefined second maximum value, during which the electronic device (101) is in a second state of motion different from the first state of motion, and generating a second counting variable ($Count_{IN\_BAG}$) indicative of said second number of iterations;
v) when the first counting variable ($Count_{NOT\_IN\_BAG}$) reaches the first maximum value ("6"), generating and outputting a first output variable (110, 115) having a first value ("1") indicative that the electronic device (101) is in the first state of motion; alternatively, when the second counting variable (110, 115) reaches the second maximum value ("3"), generating and outputting the first output variable (110, 115) having a second value ("2") indicative that the electronic device (101) is in the second state of motion;
and wherein generating a further value comprises:
vi) when the first counting variable ($Count_{NOT\_IN\_BAG}$) has the first maximum value ("6") and the second counting variable ($Count_{IN\_BAG}$) has the second minimum value ("0") or when the first counting variable ($Count_{NOT\_IN\_BAG}$) has the first minimum value ("0") and the second counting variable ($Count_{IN\_BAG}$) has the second maximum value ("3"), generating a second output variable (117) having a third value ("1"); otherwise generating the second output variable (117) having a fourth value ("0").

3. The method of claim 2, wherein determining whether the device has remained consistently or stably in said first state of motion or in said second state of motion based on said further value comprises the steps of:

vii) acquiring further first sensor data (102x, 102y, 102z) generated by said first motion sensor (102);
and:

based on the second output variable (117) having the third value ("1"), generating a further value by calculating one parameter (120) using the first sensor data (102x, 102y, 102z) acquired at step vii), wherein said one parameter (120) is one among the parameters of said set of parameters (104);
alternatively, based on the second output variable (117) having the fourth value ("0"), performing the steps i) to vii);

and
viii) in response to the further value exceeding a threshold, performing the steps i) to viii); otherwise, outputting the first output variable (110, 115) and performing the steps vii) and viii).

4. The method of anyone of claims 1-3, wherein said parameters of the set of parameters are statistical parameters.

5. The method according to claim 4, wherein the set of statistical parameters (104) includes at least one among:

- a mean value;
- an energy value;
- a variance;
- a minimum value;
- a maximum value;
- a peak-to-peak value;

- a mean-cross value; and
- a number of peaks.

in particular wherein the one further statistical parameter (120) is a peak-to-peak value.

6. The method according to anyone of claims 2-5, wherein the step iii) further includes: generating, by a supervised machine learning classifier (106) and based on the set of statistical values (104), a classification variable ($L_i$) having a classification value indicative of whether the electronic device (101) is in the first or in the second state of motion, in particular wherein the supervised machine learning classifier (106) is one among: logistic regression, naive Bayes classifier, support vector machines, decision tree, boosted tree, random forest, neural network, nearest neighbors algorithm.

7. The method according to anyone of claims 2-6, wherein the step iv) includes decrementing by one the second counting variable ($Count_{IN\_BAG}$) when incrementing by one the first counting variable ($Count_{NOT\_IN\_BAG}$); and wherein the step v) includes decrementing by one the first counting variable ($Count_{NOT\_IN\_BAG}$) when incrementing by one the second counting variable ($Count_{IN\_BAG}$);
alternatively:
wherein the step iv) includes resetting to zero the second counting variable ($Count_{IN\_BAG}$) when incrementing by one the first counting variable ($Count_{NOT\_IN\_BAG}$) ; and wherein the step v) includes resetting to zero the first counting variable ($Count_{NOT\_IN\_BAG}$) when incrementing by one the second counting variable ($Count_{IN\_BAG}$).

8. The method according to anyone of claims 2-7, further comprising the step of: controlling, based on the first output variable (110), a transition of the electronic device (101) from a first power state to a second power state, different from the first power state.

9. The method according to anyone of the preceding claims, further comprising the step of generating, by a second motion sensor (108) of the electronic device (101), second sensor data (108x, 108y, 108z), wherein the first motion sensor (102) is one among an accelerometer and a gyroscope, and the second motion sensor (108) is the other among the accelerometer and the gyroscope.

10. The method according to claim 9 when depending upon claim 4, wherein:
said step ii) includes generating the set of statistical values by calculating the set of statistical parameters (104) on the first sensor data (102x, 102y, 102z) and on the second sensor data (108x, 108y, 108z).

11. The method according to anyone of claims 2-8 or claim 9 when depending upon anyone of claims 2-8, wherein said iterations of the first number of iterations are consecutive iterations, and said iterations of the second number of iterations are consecutive iterations.

12. The method according to anyone of the preceding claims, wherein said one parameter is a peak-to-peak value of a filtered norm signal of the first sensor data.

13. An electronic device (101), comprising:

- a first motion sensor (102) configured to generate first sensor data (102x, 102y, 102z);
- a processor; and
- a memory,

wherein the memory comprises software instructions that, when executed by the processor, cause the electronic device to perform the method steps of anyone of claims 10-12.

14. A computer program product comprising instructions which, when the program is executed by a processor, cause the processor to carry out the method of anyone of claims 1-12.

FIG. 1

FIG. 2

ACCELEROMETER DATA

FIG. 3A

EP 4 783 559 A1

START OF
WINDOW $W_1$

END OF
WINDOW $W_1$

$t_0$  $t_1$  $t_2$  $t_3$        $t_{122}$ $t_{123}$ $t_{124}$ $t_{125}$

$W_1$

$W_2$

Time

EP 4 783 559 A1

FIG. 3B

FIG. 3C

ACCELEROMETER MEAN-CROSS

FIG. 3D

ACQUISITION TIME WINDOW $W_i$

| $L_i$ — Unfiltered label | 1 | 1 | 1 | 1 | 1 | 1 | 1 | 1 | 2 | 2 | 2 | 2 | 1 | 1 | 1 | 1 | 2 | 1 | 1 | 1 | 2 |
|---|---|---|---|---|---|---|---|---|---|---|---|---|---|---|---|---|---|---|---|---|---|
| 113(i) 400 — $Count_{NOT-IN-BAG}$ | 1 | 2 | 3 | 4 | 5 | 6 | 6 | 6 | 0 | 0 | 0 | 0 | 1 | 2 | 3 | 4 | 0 | 1 | 2 | 3 | 0 |
| 402 — $Count_{IN-BAG}$ | 0 | 0 | 0 | 0 | 0 | 0 | 0 | 0 | 1 | 2 | 3 | 3 | 0 | 0 | 0 | 0 | 1 | 0 | 0 | 0 | 1 |
| 115(i) — Meta-classified output | 0 | 0 | 0 | 0 | 0 | 1 | 1 | 1 | 1 | 1 | 2 | 2 | 2 | 2 | 2 | 2 | 2 | 2 | 2 | 2 | 2 |

117 — Consistency flag

**FIG. 4A**

| $L_i$ — Unfiltered label | 1 | 1 | 1 | 1 | 1 | 1 | 1 | 1 | 2 | 2 | 2 | 2 | 1 | 1 | 1 | 1 | 2 | 1 | 1 | 1 | 2 |
|---|---|---|---|---|---|---|---|---|---|---|---|---|---|---|---|---|---|---|---|---|---|
| 113(i) 400 — $Count_{NOT-IN-BAG}$ | 1 | 2 | 3 | 4 | 5 | 6 | 6 | 6 | 5 | 4 | 3 | 2 | 3 | 4 | 5 | 6 | 5 | 6 | 6 | 6 | 5 |
| 402 — $Count_{IN-BAG}$ | 0 | 0 | 0 | 0 | 0 | 0 | 0 | 0 | 1 | 2 | 3 | 3 | 2 | 1 | 0 | 0 | 1 | 0 | 0 | 0 | 1 |
| 115(i) — Meta-classified output | 0 | 0 | 0 | 0 | 0 | 1 | 1 | 1 | 1 | 1 | 2 | 2 | 2 | 2 | 2 | 2 | 1 | 1 | 1 | 1 | 1 |

117 — Consistency flag

**FIG. 4B**

## EUROPEAN SEARCH REPORT

**Application Number**

EP 26 15 1120

Europäisches
Patentamt
European
Patent Office
Office européen
des brevets

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/012248 A1 (MEDUNA DEBORAH [US] ET AL) 8 January 2015 (2015-01-08) | 1,4,5,9, 10,12-14 | INV. H04M1/72454 |
| A | * figure 4B * <br> * paragraph [0023] * <br> * paragraph [0032] * <br> * paragraph [0037] * <br> * paragraph [0043] * <br> * paragraph [0046] * <br> * paragraph [0048] * <br> * paragraph [0054] * <br> * paragraph [0062] * <br> ----- | 2,3,6-8, 11 | G06F1/3231 G06F1/16 |
| A | US 2021/255686 A1 (RIVOLTA STEFANO PAOLO [IT] ET AL) 19 August 2021 (2021-08-19) <br> * paragraph [0046] - paragraph [0048] * <br> * paragraph [0060] - paragraph [0061] * <br> * paragraph [0126] - paragraph [0128] * <br> * paragraph [0161] - paragraph [0163] * <br> ----- | 1-14 | |

**TECHNICAL FIELDS SEARCHED (IPC)**

H04M
H04W
G06F

The present search report has been drawn up for all claims

| Place of search | Date of completion of the search | Examiner |
|---|---|---|
| Munich | 22 May 2026 | Bianchi, Damiano |

EPO FORM 1503 03.82 (P04C01)

## ANNEX TO THE EUROPEAN SEARCH REPORT
## ON EUROPEAN PATENT APPLICATION NO.

EP 26 15 1120

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2026

| Patent document cited in search report | Publication date | Patent family member(s) | | Publication date |
|---|---|---|---|---|
| US 2015012248 A1 | 08-01-2015 | US | 2014129178 A1 | 08-05-2014 |
| | | US | 2015012248 A1 | 08-01-2015 |
| | | WO | 2014074268 A1 | 15-05-2014 |
| US 2021255686 A1 | 19-08-2021 | NONE | | |

EPO FORM P0459

For more details about this annex : see Official Journal of the European Patent Office, No. 12/82

**EP 4 783 559 A1**